# EUROPÄISCHE PATENTSCHRIFT

(11) **EP 2 175 710 B1**
(45) Veröffentlichungstag und Bekanntmachung des Hinweises auf die Patenterteilung: **10.11.2010**
(21) Anmeldenummer: 08774816.6
(22) Anmeldetag: 07.07.2008
(51) Int. Cl.: A01D 41/12

(54) **MÄHDRESCHER MIT EINEM ZUSÄTZLICHEN TROMMELFÖRDERER ZUR STROHABFÖRDERUNG UND EINER EINZIGEN KLAPPE ZUM WECHSELN ZWISCHEN SCHWADABLAGE- UND HÄCKSELBETRIEB**
HARVESTER COMPRISING AN ADDITIONAL DRUM CONVEYOR FOR CONVEYING STRAW AND A SINGLE FLAP FOR CHANGING BETWEEN SWATH DEPOSIT AND SHREDDING OPERATION
MOISSONNEUSE-BATTEUSE AVEC UN TRANSPORTEUR À TAMBOUR SUPPLÉMENTAIRE POUR L'ÉVACUATION DE LA PAILLE ET UN SEUL CLAPET POUR L'ALTERNANCE ENTRE LE DÉVERSEMENT DES ANDAINS ET LE HACHAGE DE LA PAILLE

(30) Priorität: 31.07.2007 DE 102007035798; 29.04.2008 DE 102008001460
(43) Veröffentlichungstag der Anmeldung: 21.04.2010
(73) Patentinhaber: Deere & Company, Moline, IL 61265-8098 (US)
(72) Erfinder: KLEIN, Oliver, 66740 Saarlouis (DE); WEICHHOLDT, Dirk, 57200 Woelfling les Sarreguemines (DE); PRIESNITZ, Rico, 66822 Lebach (DE); LAUER, Fritz, 66894 Krähenberg (DE); DOW, Chad A., East Moline, Illinois 61244 (US); FERRIS, Joel David, Davenport, Iowa 52807 (US)
(74) Vertreter: Holst, Sönke
(86) Internationale Anmeldenummer: PCT/EP2008/058741
(87) Internationale Veröffentlichungsnummer: WO 2009/015997

(56) Entgegenhaltungen:
- EP-A- 1 425 956
- EP-A- 1 461 993
- US-A1- 2005 101 363

## Beschreibung

Die Erfindung betrifft einen Mähdrescher mit:
einem in einer Vorwärtsrichtung über ein Feld bewegbaren Fahrgestell,
einer Erntegutbearbeitungseinrichtung mit einem Auslass für Stroh,
einer dem Auslass zugeordneten, drehbaren Auswurftrommel, die das Stroh im freien Flug nach hinten abgibt,
einem Strohhäcksler mit einem Einlass,
einem weiteren, oberschlächtig arbeitenden Förderer zur Strohförderung, der stromab der Auswurftrommel angeordnet ist,
und einer stromab des weiteren Förderers und stromauf des Einlasses des Strohhäckslers angeordneten Leiteinrichtung, die durch Schwenken um eine Achse in eine Häckselposition, in der sie das Stroh nach unten in den Einlass des Strohhäckslers ablenkt und in eine Schwadablageposition bringbar ist, in der sie das Stroh zu einer rückwärtig des Strohhäckslers angeordneten Rutsche durchlässt, auf der es auf den Feldboden gelangt.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird in der Regel entweder gehäckselt und über die Schneidwerksbreite auf dem Feld verteilt oder um den Strohhäcksler herum geleitet und in nicht gehäckselter Form in einem Schwad auf dem Feld abgelegt, um es später mit eine Ballenpresse aufnehmen zu können. Die am rückwärtigen Auslass der Reinigungseinrichtung verbleibenden Erntegutreste, wie Kaff und kleine Strohteile, werden durch einen Kaffstreuer auf dem Feld verteilt oder durch den Strohhäcksler geleitet und auf dem Feld verteilt. Die letztgenannte Lösung hat den Vorteil, dass man keinen separaten Kaffstreuer benötigt, erfordert jedoch, im Schwadbetriebsmodus das Stroh rückwärtig des Strohhäckslers vorbeizuleiten.

Die als gattungsbildend angesehene US 7 066 810 B beschreibt einen Mähdrescher, bei dem stromab einer rückwärtig des Auslasses einer Axialtrenneinrichtung angeordneten Auswurftrommel ein oberschlächtig arbeitendes Förderband folgt. Am rückwärtigen Ende des Förderbands sind Leitbleche angebracht, die im Häckselmodus einen nach unten weisenden Schacht bilden und das Stroh in den unterhalb und rückwärtig des hinteren Endes des Förderbands angebrachten Strohhäcksler leiten, der es häckselt und über das Feld verteilt. Die Erntegutreste aus der Reinigung werden mittels eines Kaffstreuers über das Feld verteilt. Die Leitbleche können weiterhin in eine Schwadposition verbracht werden, in der sie einen rückwärtigen Durchlass öffnen, durch den das Stroh rückwärtig des Strohhäckslers auf das Feld gelangt. In der Schwadposition decken die Leitbleche den Strohhäcksler nach oben ab. Weiterhin ist eine Position zur Erntegutresteverteilung vorgesehen, in der das in der Häckselposition die vordere Wand des Schachts bildende Leitblech schräg nach hinten verschwenkt wird, so das das Häckselgut vor dem Strohhäcksler nach unten gelangt und dort mit dem Kaff aus dem Kaffstreuer gemischt auf dem Erdboden abgelegt wird. Anstelle des Leitblechs kann auch das Förderband um die Drehachse seiner vorderen oder seiner rückwärtigen Umlenkwalze in eine etwa vertikale Stellung verschwenkt werden, in der es das von der Auswurftrommel gegen seine Vorderseite geworfene Stroh auf den Erdboden leitet. Hier ist als nachteilig anzusehen, dass separate Kaffstreuer erforderlich sind und dass eine Vielzahl an beweglichen Teilen benötigt wird, um die unterschiedlichen Betriebsarten zu realisieren.

### Aufgabe der Erfindung

Die der Erfindung zu Grunde liegende Aufgabe wird darin gesehen, einen Mähdrescher eingangs genannter Art bereitzustellen, bei dem eine unproblematische Abförderung des Strohs im Schwadablagemodus und im Häckselmodus möglich ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Mähdrescher umfasst ein in einer Vorwärtsrichtung über ein Feld bewegbares Fahrgestell und eine darin angebrachte Erntegutbearbeitungseinrichtung, die das von einem Erntevorsatz aufgenommene Erntegut drischt und trennt. Das ausgedroschene, im Wesentlichen von Korn befreite Stroh wird durch einen Auslass der Erntegutbearbeitungseinrichtung ausgeworfen und durch eine rotierende Auswurftrommel übernommen, die es nach hinten fördert und im freien Flug abgibt. Der Auswurftrommel folgt ein weiterer Förderer, der als oberschlächtig arbeitender Trommelförderer ausgeführt ist. Eine Leiteinrichtung, die aus einer einzigen schwenkbaren Klappe besteht, ist stromab des Trommelförderers angeordnet und zwischen einer Häckselposition, in der sie das Stroh nach unten in den Strohhäcksler ablenkt, und einer Schwadablageposition beweglich, in sie das Stroh nach hinten zu einer rückwärtig des Strohhäckslers angeordneten Rutsche durchlässt, auf der das Stroh ungehäckselt auf den Feldboden abgegeben wird. Die Klappe ist an ihrem vorderen, dem Trommelförderer benachbarten Ende oberhalb des Trommelförderers um eine Achse zwischen der Schwadablageposition und der Häckselposition schwenkbar angelenkt. Die Klappe weist eine komplementär an die Hüllkurve des Trommelförderers angepasste, sich daran anschmiegende Form auf.

Auf diese Weise erreicht man, dass eine einzige schwenkbare Klappe zur Bereitstellung einer umstellbaren Leiteinrichtung für das Stroh ausreicht. Der Trommelförderer hat (im Gegensatz zum Förderband der US 7 066 810 B) eine derart große Abgabegeschwindigkeit des Strohs, dass in der Schwadablageposition praktisch das gesamte Stroh nach hinten zur Rutsche abgegeben wird, so dass eine zweite, schwenkbare Klappe zur Abdeckung des Strohhäckslers im Schwadablagebetrieb nicht benötigt wird. Die Form der Klappe ist an die Form des Trommelförderers angepasst und lenkt das Stroh in die jeweils gewünschte Richtung um.

In einer möglichen Ausführungsform umfasst die Klappe einen oberen, sich in der Häckselposition von der Achse schräg nach hinten und unten erstreckenden Abschnitt und einen sich daran anschließenden, sich in der Häckselposition vertikal nach unten erstreckenden Abschnitt. Die Abschnitte sind demnach an die Form des Trommelförderers angepasst, wobei anzumerken ist, dass sie sich nicht exakt in den erwähnten Richtungen erstrecken müssen, sondern dass es hinreicht, wenn sie eine in die erwähnte Richtung verlaufende Komponente umfassen.

Vorzugsweise hat die Klappe ein gekrümmtes Profil, d. h. einen kurvenförmigen Querschnitt, der insbesondere kreisbogenförmig sein kann.

In der Schwadablageposition erstreckt sich der obere, stromauf liegende Abschnitt der Klappe vorzugsweise oberhalb des Strohflusses horizontal nach hinten, während sich der untere, stromab liegende Abschnitt dann schräg nach hinten und unten erstreckt und das Stroh nach unten auf die Rutsche ablenkt.

Da die Klappe in der Häckselposition das Stroh nach unten in den Einlass des Strohhäckslers und in ihrer Schwadablageposition der rückwärtig des Strohhäckslers angeordneten Rutsche zuführt, die es rückwärtig des Strohhäckslers auf den Feldboden abgibt, wird es möglich, dass ein Reinigungssystem die von ihm abgegebenen Erntegutreste im Schwadablagebetrieb und im Häckselbetrieb dem Einlass des Strohhäckslers zuführt, was separate Kaffstreuer einspart.

### Ausführungsbeispiel

Anhand der Abbildungen werden zwei Ausführungsbeispiele der Erfindung erläutert. Es zeigt:
- Fig.: 1 eine teilgeschnittene seitliche Ansicht eines Mähdreschers mit einem zusätzlichen Trommelförderer zur Strohabförderung und einer einzigen Klappe zum Wechsel zwischen Schwadablage- und Häckselbetrieb, und

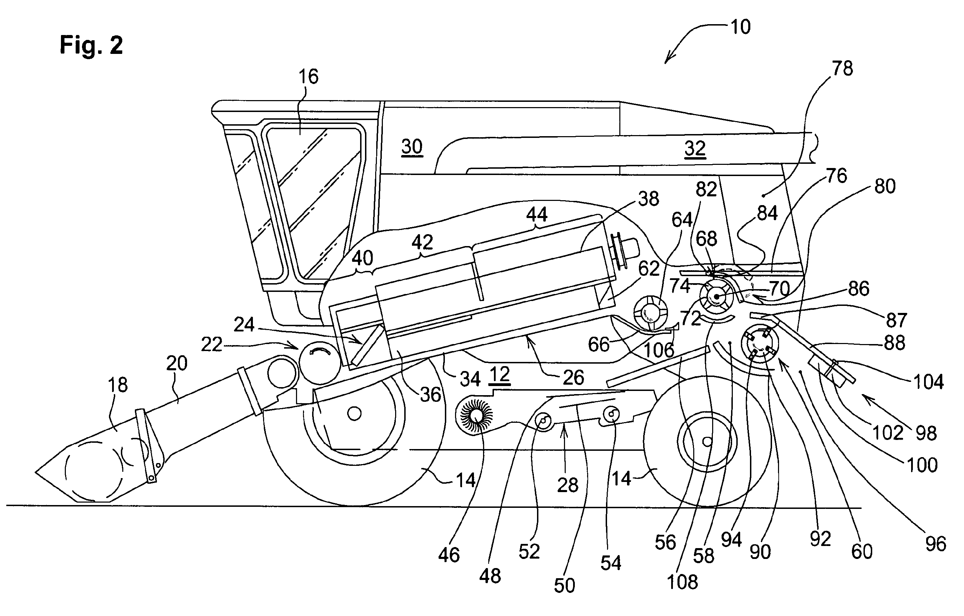

- Fig. 2: eine Ansicht einer zweiten Ausführungsform des Mähdreschers.

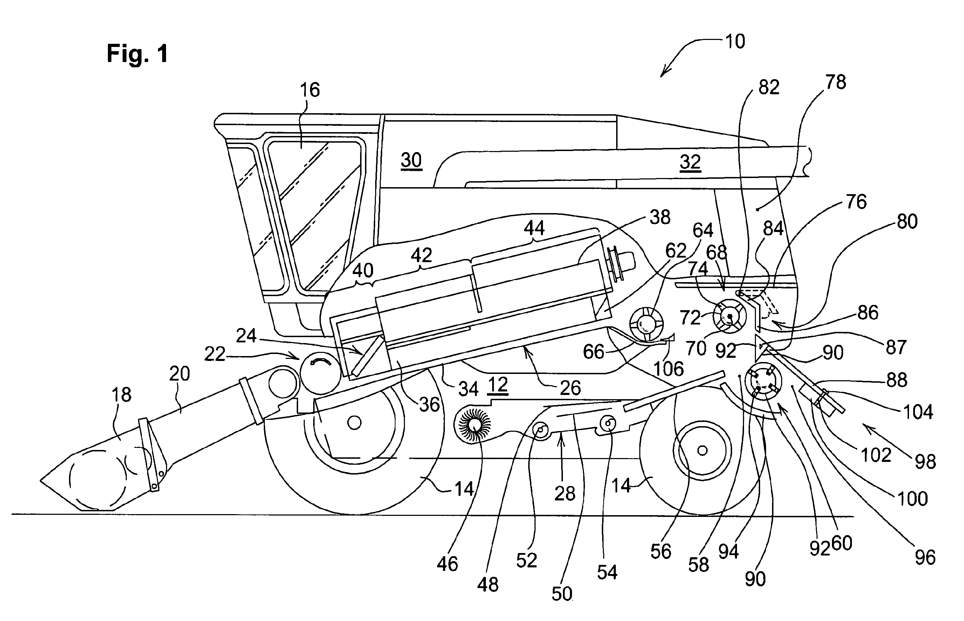

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Emtegutbearbeitungseinrichtung 26. Im Folgenden beziehen sich Richtungsangaben, wie vom und hinten, auf die Vorwärtsrichtung des Mähdreschers 10.

Die Emtegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinheit 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38. Anstelle einer axialen Erntegutbearbeitungseinheit 26 kann auch eine tangentiale Dreschtrommel und eine ihr folgende axiale Trenneinrichtung oder Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen Einlass 58 eines Strohhäckslers 60 gefördert.

Gedroschenes, den Trennabschnitt 44 verlassendes Stroh wird durch einen Auslass 62 aus der Emtegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 und etwa in vertikaler Höhe ihrer Drehachse befindet sich ein weiterer Förderer in Form eines oberschlächtig arbeitenden Trommelförderers 68. Der Trommelförderer 68 erstreckt sich horizontal und quer zur Vorwärtsrichtung und ist durch einen geeigneten Antrieb um seine Achse 70, an der er drehbar am Fahrgestell 12 befestigt ist, in eine Drehrichtung in Drehung versetzbar, in der er oberschlächtig arbeitet und in der Figur 1 im Uhrzeigersinn dreht, wie durch den Pfeil angedeutet. Zum Antrieb des Trommelförderers 68 wird in der Regel ein Hydraulikmotor verwendet. Der Trommelförderer 68 entspricht in seinem Aufbau der Auswurftrommel 64 und umfasst einen rotationssymmetrischen Mantel 72 mit um seinen Umfang verteilten, starr daran angebrachten Mitnehmern 74.

Oberhalb der Auswurftrommel 64 und des Trommelförderers 68 ist eine sich horizontal und in Vorwärtsrichtung erstreckende obere Wand 76 angebracht, die einen darüber befindlichen Motorraum 78 nach unten abschließt. An der Wand 76 ist eine Klappe 80, die als zum Umschalten zwischen einem Schwadablagebetrieb und einen Häckselbetrieb dienende Leiteinrichtung vorgesehen ist und das einzige Element der Leiteinrichtung bildet, an ihrem vorderen, dem Trommelförderer 68 benachbarten Ende um eine sich horizontal und quer zur Vorwärtsrichtung erstreckende Achse 82 zwischen einer Schwadablageposition und einer Häckselposition verschwenkbar angelenkt. Die Achse 82 befindet sich bezüglich der Vorwärtsrichtung zwischen der Achse 70 des Trommelförderers 68 und dem rückwärtigen Ende seines Hüllkreises, könnte aber auch geringfügig dahinter oder vor der Achse 70 liegen. Die Klappe 80 umfasst einen oberen, sich in der Häckselposition, in der die Klappe 80 in der Figur 1 mit durchgezogenen Linien dargestellt ist, von der Achse 82 schräg nach hinten und unten erstreckenden Abschnitt 84 und einen sich daran anschließenden, sich in der Häckselposition vertikal nach unten erstreckenden Abschnitt 86. Die Abschnitte 84, 86 sind jeweils in sich flach und durch einen winkligen Übergang untereinander verbunden. Die Klappe 80 ist demnach in ihrer Form an die Form des Trommelförderers 68 angepasst.

Unterhalb des unteren und rückwärtigen Endes der Klappe 80 schließt sich (bei in der Häckselstellung befindlicher Klappe 80) lückenlos ein mit dem Fahrgestell 12 fest verbundenes Blech 87 an, das sich schräg nach hinten und unten erstreckt und mit einer sich daran anschließenden, sich parallel zum Blech 87 erstreckenden Rutsche 88 verbunden ist, auf der das Stroh im Schwadablagebetrieb nach unten auf den Feldboden gleiten kann. Das Strohschwad kann noch durch an der Oberseite der Rutsche 88 angebrachte Leitkufen oder Strohleitrechen (nicht gezeigt) in eine gewünschte Form gebracht werden. Vor dem Blech 87 sind ein sich schräg nach vom und unten erstreckendes Blech 90 und ein vertikales Blech 92 angebracht, die mit dem Blech 87 ein Dreieckprofil formen und eine obere und vordere Abdeckung des Einlasses 58 des Strohhäckslers 60 bilden.

Die Klappe 80 ist um die Achse 82 zwischen der Häckselposition, in der sie in der Figur mit durchgezogenen Linien dargestellt ist, und einer Schwadablageposition verschwenkbar, in der die Klappe 80 in der Figur mit gestrichelten Linien dargestellt ist und sich der bezüglich des Erntegutresteflusses stromauf liegende Bereich der Klappe 80 (d. h. ihr oberer Abschnitt 84) parallel zur Wand 76 oberhalb des Strohflusses nach hinten erstreckt, während sich der bezüglich des Emtegutresteflusses stromab liegende Bereich der Klappe 80 (d. h. ihr unterer Abschnitt 86) oberhalb der Rutsche 88 schräg nach hinten und unten erstreckt und den Strohfluss nach unten auf die Rutsche 88 ablenkt.

Unterhalb der Bleche 87, 90 befindet sich der Strohhäcksler 60, der sich aus einem Gehäuse 90 und einem darin angeordneten, um eine quer zur Vorwärtsrichtung und horizontal verlaufende Achse drehbaren Rotor 92 mit um den Umfang des Rotors 92 verteilten, pendelnd aufgehängten Häckselmessern 94 zusammensetzt. Die Rutsche 88 bildet ein oberes Gehäuse für den Strohhäcksler 60. Stromab eines Auslasses 96 des Strohhäckslers 60 ist sind zwei seitlich nebeneinander unterhalb der Rutsche 88 angeordnete Gebläse 98 vorgesehen, von denen in der Figur 1 nur ein einziges erkennbar ist. Die Gebläse 98 umfassen eine Anzahl an Luftschaufeln 100, die jeweils starr mit einer sich orthogonal zur Rutsche 88 erstreckenden Welle 102 verbunden sind. Die Welle 102 ist durch jeweils einen Hydraulikmotor 104 in Drehung versetzbar. In der Schwadablageposition fördert der Strohhäcksler 60 nur die Erntegutreste aus dem Reinigungssystem 28 zu den Gebläsen 98, welche sie etwa über die Breite des Schneidwerks 18 auf dem Feldboden verteilen. Anstelle der Gebläse 98 kann auch eine Anzahl seitlich nebeneinander angeordneter, starrer bzw. vibrierender Strohleitbleche verwendet werden. Weiterhin könnte der Strohhäcksler 60 auch ein von der Rutsche 88 unabhängiges oberes Gehäuse erhalten, an dem auch die Gebläse 98 befestigt werden könnten. Unterhalb des Trommelförderers 68 ist ein gekrümmtes Abdeckblech 108 angebracht.

Zur Schwadablage (Langstrohablage) des Strohs ist die Klappe 80 in ihre (gestrichelt dargestellte) Schwadablageposition verbringbar, durch einen geeigneten Hebel von Hand durch den Bediener, oder mittels eines fremdkraftbetätigten Antriebs (nicht gezeigt) von der Bedienerkabine 16 aus. Das Stroh wird vom Auslass 62 der Erntegutbearbeitungseinrichtung 26 der Auswurftrommel 64 zugeführt, die es im freien Flug zum Trommelförderer 68 wirft. Durch stromab der Auswurftrommel 68 angeordnete, vorzugsweise verstellbare Leitkufen 106 kann die seitliche Verteilung des Strohs optimiert werden. Der Trommelförderer 68 wird oberschlächtig betrieben. Dadurch wird das Stroh aktiv nach hinten gegen den unteren Abschnitt 86 der Klappe 80 geworfen und erreicht die Rutsche 76, auf der es auf den Feldboden rutscht. Aufgrund der relativ hohen erreichbaren Drehzahl des Trommelförderers 68, die dazu führt, dass fast das gesamte Stroh nach hinten auf die Rutsche 88 abgegeben wird, erübrigt sich eine weitere Klappe zur Abdeckung des Einlasses 58 des Strohhäckslers 60 im Schwadablagebetrieb.

In der Häckselposition ist die Klappe 80 gegenüber der Schwadablageposition um die Achse 82 nach unten verschwenkt, wie in der Figur 1 gezeigt. Das vom Trommelförderer 68 gegen die Klappe 80 geworfene Stroh wird durch die Klappe 80 nach unten abgelenkt und fällt nach unten in den Einlass 58 des Strohhäckslers 60, der es gemeinsam mit den Erntegutresten aus dem Reinigungssystem 28 häckselt und mittels der Gebläse 98 auf dem Feldboden verteilt. Das rückwärtige Ende der Klappe (80) befindet sich unterhalb der Achse 70 des Trommelförderers 68.

In der zweiten Ausführungsform nach Figur 2 werden mit der ersten Ausführungsform übereinstimmende Elemente mit denselben Bezugszeichen gekennzeichnet. Als wesentlicher Unterschied ist zu erwähnen, dass die Klappe 80 ein kreisbogenförmig gekrümmtes Profil aufweist, so dass der obere Abschnitt 84 kontinuierlich in den unteren Abschnitt 86 übergeht. Weiterhin sind in der zweiten Ausführungsform die Bleche 90 und 92 entfallen, und das vordere, der Rutsche 88 vorgelagerte Blech 87 ist gegenüber der Rutsche 88 nach unten und vorne hin abgewinkelt. Außerdem befindet sich die Achse 82 vor der Achse 70 des Trommelförderers 68.

## Patentansprüche

1. Mähdrescher (10) mit:
einem in einer Vorwärtsrichtung über ein Feld bewegbaren Fahrgestell (12),
einer Emtegutbearbeitungseinrichtung (26) mit einem Auslass (62) für Stroh,
einer dem Auslass (62) zugeordneten, drehbaren Auswurftrommel (64), die das Stroh im freien Flug nach hinten abgibt,
einem Strohhäcksler (60) mit einem Einlass (58),
einem weiteren, oberschlächtig arbeitenden Förderer zur Strohförderung, der stromab der Auswurftrommel (64) angeordnet ist,
und einer stromab des weiteren Förderers und stromauf des Einlasses (58) des Strohhäckslers (60) angeordneten Leiteinrichtung, die durch Schwenken um eine Achse (82) in eine Häckselposition, in der sie das Stroh nach unten in den Einlass (58) des Strohhäckslers (60) ablenkt und in eine Schwadablageposition bringbar ist, in der sie das Stroh zu einer rückwärtig des Strohhäckslers (60) angeordneten Rutsche (88) durchlässt, auf der es auf den Feldboden gelangt,
**dadurch gekennzeichnet, dass** der weitere Förderer ein Trommelförderer (68) ist,
dass die Leiteinrichtung aus einer einzigen Klappe (80) besteht, deren Achse (82) sich an ihrem dem Trommelförderer (68) zugewandten Ende der Klappe (80) und oberhalb des Trommelförderers (68) befindet,
und dass die Klappe (80) eine komplementär an die Hüllkurve des Trommelförderers (68) angepasste, sich daran anschmiegende Form aufweist.

2. Mähdrescher (10) nach Anspruch 1, **dadurch gekennzeichnet, dass** die Klappe (80) einen oberen, sich in der Häckselposition von der Achse (82) schräg nach hinten und unten erstreckenden Abschnitt (84) und einen sich daran anschließenden, sich in der Häckselposition vertikal nach unten erstreckenden Abschnitt (86) aufweist.

3. Mähdrescher (10) nach Anspruch 1 oder 2, **dadurch gekennzeichnet, dass** die Klappe (80) ein gekrümmtes Profil aufweist.

4. Mähdrescher (10) nach einem der Ansprüche 1 bis 3, **dadurch gekennzeichnet, dass** sich der obere Abschnitt (84) der Klappe (80) in der Schwadablageposition oberhalb des Strohflusses horizontal nach hinten erstreckt, während sich ihr unterer Abschnitt (86) dann schräg nach hinten und unten erstreckt und das Stroh nach unten auf die Rutsche (88) ablenkt.

5. Mähdrescher (10) nach einem der Ansprüche 1 bis 4, **dadurch gekennzeichnet, dass** sich die Achse (82) vor der Achse (70) des Trommelförderers (68) befindet.

6. Mähdrescher (10) nach einem der Ansprüche 1 bis 5, **dadurch gekennzeichnet, dass** sich das stromab liegende Ende der Klappe (80) in der Häckselposition unterhalb der Achse (70) des Trommelförderers (68) befindet.

7. Mähdrescher (10) nach einem der Ansprüche 1 bis 6, **dadurch gekennzeichnet, dass** ein Reinigungssystem (28) die von ihm abgegebenen Erntegutreste im Schwadablagebetrieb und im Häckselbetrieb dem Einlass (58) des Strohhäckslers (60) zuführt.

## Claims

1. Harvester (10) comprising:
a chassis (12), which can be moved across a field in a forward direction,
a crop processing device (26) having an outlet (62) for straw,
a rotatable ejector drum (64), which is associated with the outlet (62) and discharges the straw rearwards in free flight,
a straw chopper (60) with an inlet (58),
a further conveyor for conveying straw, which operates in an overshot manner and is arranged downstream of the ejector drum (64),
and a guiding device, which is arranged downstream of the further conveyor and upstream of the inlet (58) of the straw chopper (60) and which can be moved, by pivoting about an axis (82), into a chopping position, in which it deflects the straw downwards into the inlet (58) of the straw chopper (60), and a swath deposit position, in which it allows the straw to pass through to a chute (88), which is arranged to the rear of the straw chopper (60) and on which it reaches the ground,
**characterized in that** the further conveyor is a drum conveyor (68),
**in that** the guiding device comprises a single flap (80), the axis (82) of which is situated at the end of the flap (80) that is adjacent to the drum conveyor (68) and which is situated above the drum conveyor (68),
and **in that** the flap (80) has a shape which is made complementary to the envelope curve of the drum conveyor (68) and hugs said curve.

2. Harvester (10) according to Claim 1, **characterized in that** the flap (80) has an upper section (84) which extends obliquely rearwards and downwards from the axis (82) in the chopping position and a section (86) which adjoins the upper section and extends vertically downwards in the chopping position.

3. Harvester (10) according to Claim 1 or 2, **characterized in that** the flap (80) has a curved profile.

4. Harvester (10) according to one of Claims 1 to 3, **characterized in that** the upper section (84) of the flap (80) extends horizontally rearwards above the flow of straw in the swath deposit position, while its lower section (86) then extends obliquely rearwards and downwards and deflects the straw downwards onto the chute (88).

5. Harvester (10) according to one of Claims 1 to 4, **characterized in that** the axis (82) is situated ahead of the axis (70) of the drum conveyor (68).

6. Harvester (10) according to one of Claims 1 to 5, **characterized in that**, in the chopping position, the downstream end of the flap (80) is situated below the axis (70) of the drum conveyor (68).

7. Harvester (10) according to one of Claims 1 to 6, **characterized in that** a cleaning system (28) feeds the crop residues discharged by it to the inlet (58) of the straw chopper (60) in swath deposit operation and in chopping operation.

## Revendications

1. Moissonneuse-batteuse (10) comprenant :
un mécanisme de roulement (12) déplaçable sur un champ dans une direction d'avance,
un dispositif de traitement de récoltes (26) avec une sortie (62) pour la paille,
un tambour d'éjection rotatif (64) associé à la sortie (62), qui envoie la paille vers l'arrière en vol libre,
un hache-paille (60) avec une entrée (58),
un transporteur supplémentaire fonctionnant par projection pour le transport de la paille, qui est disposé en aval du tambour d'éjection (64),
et un dispositif de guidage disposé en aval du transporteur supplémentaire et en amont de l'entrée (58) du hache-paille (60), qui peut être amené par pivotement autour d'un axe (82) dans une position de hachage, dans laquelle il dévie la paille vers le bas dans l'entrée (58) du hache-paille (60), et dans une position de déversement des andains, dans laquelle il laisse passer la paille vers une rampe (88) disposée vers l'arrière du hache-paille (60), sur laquelle elle parvient sur le sol du champ,
**caractérisée en ce que** le transporteur supplémentaire est un transporteur à tambour (68),
**en ce que** le dispositif de guidage se compose d'un clapet unique (80) dont l'axe (82) se situe à l'extrémité du clapet (80) tournée vers le transporteur à tambour (68) et au-dessus du transporteur à tambour (68),
et **en ce que** le clapet (80) présente une forme adaptée de manière complémentaire à la courbe d'enveloppe du transporteur à tambour (68), s'y ajustant étroitement.

2. Moissonneuse-batteuse (10) selon la revendication 1, **caractérisée en ce que** le clapet (80) présente une portion supérieure (84) s'étendant depuis l'axe (82) obliquement vers l'arrière et vers le bas, et une portion (86) s'y raccordant, s'étendant verticalement vers le bas dans la position de hachage.

3. Moissonneuse-batteuse (10) selon la revendication 1 ou 2, **caractérisée en ce que** le clapet (80) présente un profil courbe.

4. Moissonneuse-batteuse (10) selon l'une quelconque des revendications 1 à 3, **caractérisée en ce que** la portion supérieure (84) du clapet (80) s'étend dans la position de déversement des andains au-dessus du flux de paille horizontalement vers l'arrière, tandis que sa portion inférieure (86) s'étend ensuite obliquement vers l'arrière et vers le bas, et dévie la paille vers le bas sur la rampe (88).

5. Moissonneuse-batteuse (10) selon l'une quelconque des revendications 1 à 4, **caractérisée en ce que** l'axe (82) se situe avant l'axe (70) du transporteur à tambour (68).

6. Moissonneuse-batteuse (10) selon l'une quelconque des revendications 1 à 5, **caractérisée en ce que** l'extrémité aval du clapet (80) se trouve dans la position de hachage sous l'axe (70) du transporteur à tambour (68).

7. Moissonneuse-batteuse (10) selon l'une quelconque des revendications 1 à 6, **caractérisée en ce qu'**un système de nettoyage (28) achemine les résidus de récolte distribués par lui dans le mode de déversement des andains et dans le mode de hachage à l'entrée (58) du hache-paille (60).
